# EUROPEAN PATENT SPECIFICATION

(11) **EP 3 054 445 B1**
(45) Date of publication and mention of the grant of the patent: **06.11.2019**
(21) Application number: 16154075.2
(22) Date of filing: 03.02.2016
(51) Int. Cl.: G09G 3/36

(54) **DISPLAY PANEL AND A DISPLAY APPARATUS INCLUDING THE SAME**
ANZEIGEBILDSCHIRM UND ANZEIGEVORRICHTUNG DAMIT
PANNEAU D'AFFICHAGE ET APPAREIL D'AFFICHAGE COMPRENANT CELUI-CI

(30) Priority: 03.02.2015 KR 20150016852
(43) Date of publication of application: 10.08.2016
(73) Proprietor: Samsung Display Co., Ltd., Gyeonggi-do (KR)
(72) Inventor: PARK, Se-Hyuk, Gyeonggi-do (KR); KIM, Byung-Sun, Gyeonggi-do (KR); PARK, Cheol-Woo, Gyeonggi-do (KR); CHO, Jae-Hyun, Seoul (KR); GU, Bon-Seog, Gyeonggi-do (KR); KIM, Hong-Soo, Gyeonggi-do (KR)
(74) Representative: Mounteney, Simon James

(56) References cited:
- EP-A2- 1 492 078
- US-A1- 2002 186 190

## Description

### TECHNICAL FIELD

The present invention relates to a display apparatus, and more particularly to, a display panel and a display apparatus including the display panel.

### DISCUSSION OF THE RELATED ART

A liquid crystal display (LCD) apparatus may include a first substrate including a pixel electrode, a second substrate including a common electrode, and a liquid crystal layer disposed between the first and second substrates. Voltages may be applied to the pixel electrode and the common electrode to generate an electric field. Transmittance of light passing through the liquid crystal layer may be controlled according to the electric field, and thus, a desired image may be displayed.

Since the number of horizontal rows increases as a display resolution or a size of the LCD apparatus increases, a driving scheme for securing a pixel charging duration may be employed.

US2002186190 describes an electro-optic device comprising a matrix array of an LCD display element, the device having shared-source adjacent transistors in contiguous rows, thereby reducing the capacitive loading on drivers providing voltage signals which modulate the display elements. In addition, a method is provided for utilizing a matrix design that incorporates non-contiguous, multi-row addressing and shared-source transistors. The device and method provide a display device with large pixel count, yet with high display definition and performance.

EP1492078 describes a liquid crystal display apparatus includes a liquid crystal panel assembly having pixels arranged in a matrix form, which have a first group of pixels and a second group of pixels, gate lines having a first group of gate lines and a second group of gate lines that are connected with the first group of pixels and the second group of pixels, respectively, and data lines each of which is connected with one of the first group of pixels and one of the second group of pixels in every row of the matrix form. The liquid crystal display apparatus also includes a signal controller that receives input image signals and generates two groups of image data, a data driver that receives the two groups of image data and provides data voltages corresponding to the image data to the data lines, and a gate driving unit including a first gate driver that provides first gate-on signals to the first group of gate lines and a second gate driver that provides second gate-on signals to the second group of gate lines. The device has a signal controller that receives input image signals and creates two groups of left and right pixels. A data driver receives the pixels and provides data voltages to the pixels which are connected to a data line. A gate driving unit has gate drivers applying gate-on signals to group of gate lines. The gate drivers have shift registers formed together with a switching unit.

### SUMMARY

According to an embodiment of the present inventive concept, there is provided a display panel according to claim 1. Optional features of the present disclosure are provided in claims 2-4.

### BRIEF DESCRIPTION OF THE DRAWINGS

Illustrative, non-limiting embodiments of the present inventive concept will be more clearly understood from the following detailed description taken in conjunction with the accompanying drawings, in which:
FIG. 1 is a block diagram illustrating a display apparatus according to an embodiment of the present inventive concept;
FIG. 2 is a block diagram illustrating a timing controller included in the display apparatus of FIG. 1 according to an embodiment of the present inventive concept;
FIG. 3 is a plan view illustrating a display panel according to an embodiment of the present inventive concept;
FIGS. 4A and 4B are diagrams for describing an operation of the display panel of FIG. 3 according to an embodiment of the present inventive concept;
FIG. 5 is a plan view illustrating a display panel according to an embodiment of the present inventive concept; and
FIGS. 6A and 6B are diagrams for describing an operation of the display panel of FIG. 5 according to an embodiment of the present inventive concept.

### DETAILED DESCRIPTION

Embodiments of the present inventive concept will be described more fully with reference to the accompanying drawings. The present inventive concept may, however, be embodied in many different forms and should not be construed as being limited to the embodiments set forth herein. Like reference numerals may refer to like elements throughout this application.

As used herein, the term "and/or" includes any and all combinations of one or more of the associated listed items.

It will be understood that when an element is referred to as being "connected" or "coupled" to another element, it can be directly connected or coupled to the other element or intervening elements may be present.

As used herein, the singular forms "a," "an" and "the" are intended to include the plural forms as well, unless the context clearly indicates otherwise.

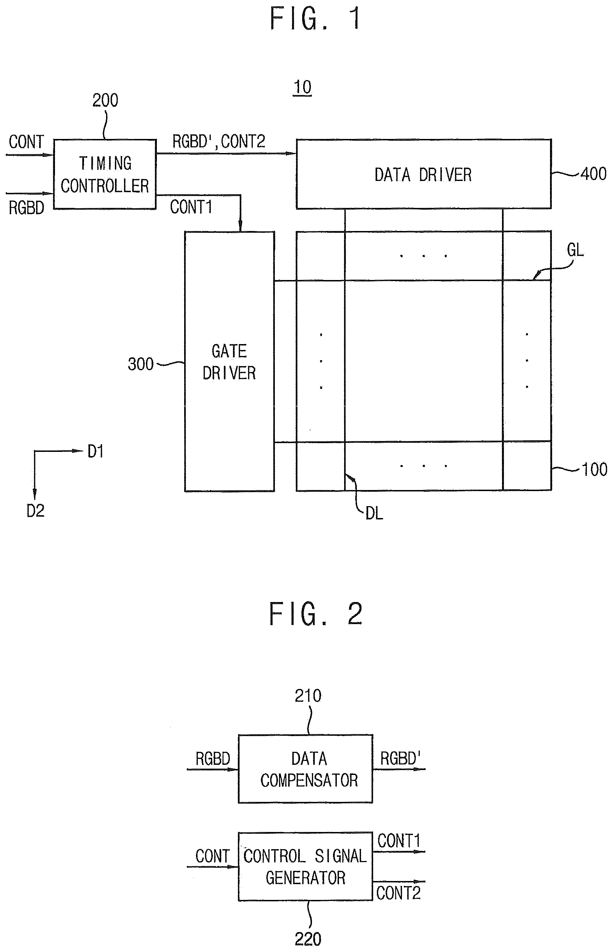

FIG. 1 is a block diagram illustrating a display apparatus according to an embodiment of the present inventive concept.

Referring to FIG. 1, a display apparatus 10 includes a display panel 100, a timing controller 200, a gate driver 300 and a data driver 400.

The display panel 100 is connected to a plurality of gate lines GL and a plurality of data lines DL. The display panel 100 displays an image having a plurality of grayscales based on output image data RGBD'. The gate lines GL may extend in a first direction D1, and the data lines DL may extend in a second direction D2 crossing (e.g., substantially perpendicular to) the first direction D1.

The display panel 100 may include a plurality of pixels that is arranged in a matrix form. Each pixel may be electrically connected to a respective one of the gate lines GL and a respective one of the data lines DL.

Each pixel may include a switching element, a liquid crystal capacitor and a storage capacitor. The liquid crystal capacitor and the storage capacitor may be electrically connected to the switching element. For example, the switching element may be a thin film transistor. The liquid crystal capacitor may include a first electrode connected to a pixel electrode and a second electrode connected to a common electrode. A data voltage may be applied to the first electrode of the liquid crystal capacitor. A common voltage may be applied to the second electrode of the liquid crystal capacitor. The storage capacitor may include a first electrode connected to the pixel electrode and a second electrode connected to a storage electrode. The data voltage may be applied to the first electrode of the storage capacitor. A storage voltage may be applied to the second electrode of the storage capacitor. The storage voltage may be substantially equal to the common voltage.

Each pixel may have a rectangular shape. For example, each pixel may have a relatively short side in the first direction D1 and a relatively long side in the second direction D2. The relatively short side of each pixel may be substantially parallel to the gate lines GL. The relatively long side of each pixel may be substantially parallel to the data lines DL.

The display panel 100 according to an embodiment of the present inventive concept may operate based on an inversion driving scheme in which a polarity of a data voltage applied to each pixel is reversed with respect to the common voltage at every predetermined period. Thus, characteristic of the liquid crystal in the display panel 100 might not be degraded due to the inversion driving scheme. For example, the display panel 100 may have a polarity pattern of a dot inversion where a single pixel is surrounded by pixels having a polarity, which is opposite to that of the single pixel.

In the display panel 100 according to an embodiment of the present inventive concept, a plurality of horizontal rows (e.g., pixel rows) may be driven by a single gate line. For example, pixels that are disposed in odd-numbered (e.g., three, five, seven, ...) adjacent pixel rows may be connected to a single gate line and may be enabled or disabled by the single gate line, and thus, charging durations of the pixels (e.g., charging durations of the capacitors included in the pixels) may increase.

In addition, the display panel 100 according to an embodiment of the present inventive concept may have a structure where the data lines are connected to pixels based on a non-alternate scheme and an alternate scheme. The non-alternate scheme may be understood as a scheme in which a particular data line is connected to pixels disposed at a single side (e.g., only a left side or a right side) with respect to the particular data line. The alternate scheme may be understood as a scheme in which a particular data line is connected to pixels disposed at both sides (e.g., both left and right sides) with respect to the particular data line. For example, some of the data lines DL in the display panel 100 may be implemented based on the non-alternate scheme, and the other of the data lines DL in the display panel 100 may be implemented based on the alternate scheme. To have the structure in which the data lines are connected to the pixels based on the non-alternate scheme and the alternate scheme, the display panel 100 according to an embodiment of the present inventive concept may further include at least one data line in comparison with another display panel.

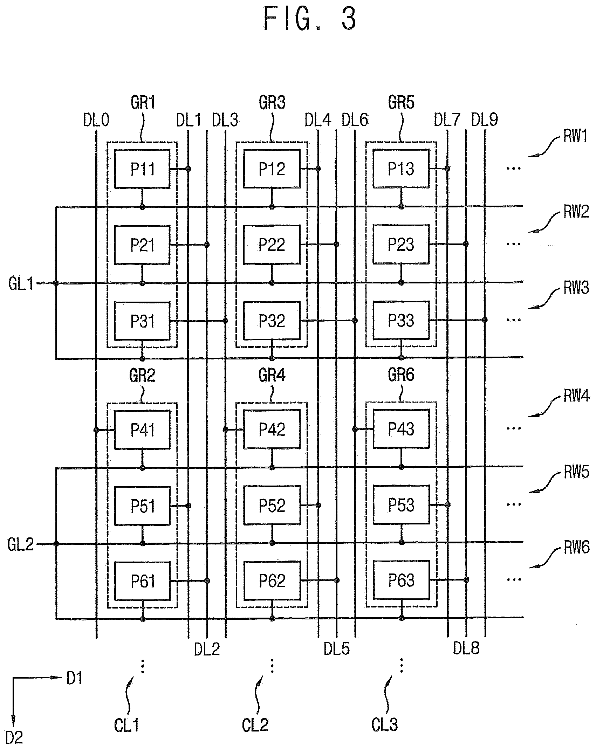

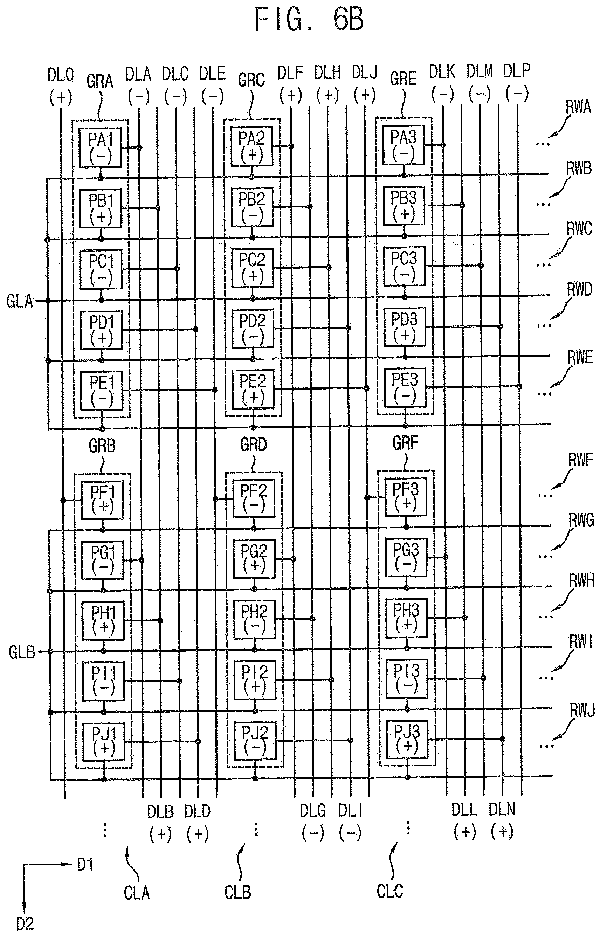

Detailed configurations and arrangements of the display panel 100 and the pixels included in the display panel 100 will be described below with reference to FIGS. 3 through 6A and 6B.

The timing controller 200 controls operations of the display panel 100, the gate driver 300, and the data driver 400. The timing controller 200 receives input image data RGBD and an input control signal CONT from an external device (e.g., a host). The input image data RGBD may include a plurality of input pixel data for the plurality of pixels. Each input pixel data may include red grayscale data R, green grayscale data G and blue grayscale data B for a respective one of the plurality of pixels. The input control signal CONT may include a master clock signal, a data enable signal, a vertical synchronization signal, a horizontal synchronization signal, etc.

The timing controller 200 generates the output image data RGBD', a first control signal CONT1 and a second control signal CONT2 based on the input image data RGBD and the input control signal CONT.

For example, the timing controller 200 may generate the output image data RGBD' based on the input image data RGBD. The output image data RGBD' may be provided to the data driver 400. In some embodiment of the present inventive concept, the output image data RGBD' may be image data that is substantially the same as the input image data RGBD. In an exemplary embodiment of the present inventive concept, the output image data RGBD' may be compensated image data that is generated by compensating the input image data RGBD. The output image data RGBD' may include a plurality of output pixel data for the plurality of pixels.

The timing controller 200 may generate the first control signal CONT1 based on the input control signal CONT. The first control signal CONT1 may be provided to the gate driver 300, and a driving timing of the gate driver 300 may be controlled based on the first control signal CONT1. The first control signal CONT1 may include a vertical start signal, a gate clock signal, etc. The timing controller 200 may generate the second control signal CONT2 based on the input control signal CONT. The second control signal CONT2 may be provided to the data driver 400, and a driving timing of the data driver 400 may be controlled based on the second control signal CONT2. The second control signal CONT2 may include a horizontal start signal, a data clock signal, a data load signal, a polarity control signal, etc.

The gate driver 300 receives the first control signal CONT1 from the timing controller 200. The gate driver 300 generates a plurality of gate signals for driving the gate lines GL based on the first control signal CONT1. The gate driver 300 may sequentially apply the plurality of gate signals to the gate lines GL.

The data driver 400 receives the second control signal CONT2 and the output image data RGBD' from the timing controller 200. The data driver 400 generates a plurality of data voltages (e.g., analog data voltages) based on the second control signal CONT2 and the output image data RGBD' (e.g., digital image data). The data driver 400 may apply the plurality of data voltages to the data lines DL.

In some embodiment of the present inventive concept, the data driver 400 may include a shift register, a latch, a signal processor and a buffer. The shift register may output a latch pulse to the latch. The latch may temporarily store the output image data RGBD', and may output the output image data RGBD' to the signal processor. The signal processor may generate the analog data voltages based on the digital output image data RGBD' and may output the analog data voltages to the buffer. The buffer may output the analog data voltages to the data lines DL.

In some embodiment of the present inventive concept, the gate driver 300 and/or the data driver 400 may be disposed, e.g., directly mounted, on the display panel 100, or may be connected to the display panel 100 in a tape carrier package (TCP) type. In an exemplary embodiment of the present inventive concept, the gate driver 300 and/or the data driver 400 may be integrated in the display panel 100.

FIG. 2 is a block diagram illustrating a timing controller included in the display apparatus of FIG. 1 according to an embodiment of the present inventive concept.

Referring to FIG. 2, the timing controller 200 may include a data compensator 210 and a control signal generator 220. The timing controller 200 is illustrated in FIG. 2 as being divided into two elements for convenience of description, however, the timing controller 200 may not be physically divided.

The data compensator 210 may receive the input image data RGBD from an external device and may generate the output image data RGBD' by selectively compensating the input image data RGBD. For example, the data compensator 210 may selectively perform an image quality compensation, a spot compensation, an adaptive color correction (ACC), and/or a dynamic capacitance compensation (DCC) for the input image data RGBD to generate the output image data RGBD'.

In some embodiments of the present inventive concept, the data compensator 210 may include a single-line memory that stores pixel data corresponding to a single horizontal row (e.g., a single pixel row).

The control signal generator 220 may receive the input control signal CONT from an external device and may generate the first control signal CONT1 for the gate driver 300 in FIG. 1 and the second control signal CONT2 for the data driver 400 in FIG. 1 based on the input control signal CONT. The control signal generator 220 may output the first control signal CONT1 to the gate driver 300 in FIG. 1 and may output the second control signal CONT2 to the data driver 400 in FIG. 1.

FIG. 3 is a plan view illustrating a display panel according to an embodiment of the present inventive concept.

Referring to FIG. 3, a display panel includes a plurality of gate lines GL1 and GL2, a plurality of data lines DL0, DL1, DL2, DL3, DL4, DL5, DL6, DL7, DL8 and DL9, and a plurality of pixels P11, P21, P31, P41, P51, P61, P12, P22, P32, P42, P52, P62, P13, P23, P33, P43, P53 and P63. A portion of the display panel is illustrated in FIG. 3 for convenience of description.

The plurality of gate lines GL1 and GL2 extend in a first direction D1. A plurality of pixel rows RW1, RW2, RW3, RW4, RW5 and RW6 may be defined by the plurality of gate lines GL1 and GL2. The plurality of data lines DL0 through DL9 extend in a second direction D2 crossing the first direction D1. A plurality of pixel columns CL1, CL2 and CL3 may be defined by the plurality of data lines DL0 through DL9.

Each of the plurality of pixels P11 through P63 may be disposed in a respective one of the plurality of pixel rows RW1 through RW6 and a respective one of the plurality of pixel columns CL1 through CL3.

For example, the pixels P11, P21, P31, P41, P51 and P61 may be disposed in the first pixel column CL1. The pixels P12, P22, P32, P42, P52 and P62 may be disposed in the second pixel column CL2. The pixels P13, P23, P33, P43, P53 and P63 may be disposed in the third pixel column CL3.

The pixels P11, P12 and P13 may be disposed in the first pixel row RW1. The pixels P21, P22 and P23 may be disposed in the second pixel row RW2. The pixels P31, P32 and P33 may be disposed in the third pixel row RW3. The pixels P41, P42 and P43 may be disposed in the fourth pixel row RW4. The pixels P51, P52 and P53 may be disposed in the fifth pixel row RW5. The pixels P61, P62 and P63 may be disposed in the sixth pixel row RW6.

Each of the plurality of pixels P11 through P63 may be connected to a respective one of the plurality of gate lines GL1 and GL2 and a respective one of the plurality of data lines DL0 through DL9. Pixels disposed in three adjacent pixel rows may be connected to a single gate line. For example, three adjacent pixel rows may be driven by a single gate line. Some of the data lines DL1 through DL9 may be connected to some of the pixels P11 through P63 based on the non-alternate scheme, and the other of the data lines DL1 through DL9 may be connected to the other of the pixels P11 through P63 based on the alternate scheme.

A first pixel group GR1 includes three pixels P11, P21 and P31 (e.g., odd-numbered pixels) that are disposed in the first pixel column CL1 and are connected to the first gate line GL1. A second pixel group GR2 includes three pixels P41, P51 and P61 (e.g., odd-numbered pixels) that are disposed in the first pixel column CL1 and are connected to the second gate line GL2. The data line DL0 is connected to the second pixel group GR2 (e.g., the pixel P41) of the first and second pixel groups GR1 and GR2. For example, the data line DL0 is not connected to the first pixel group GR1. The data line DL3 is connected to the first pixel group GR1 (e.g., the pixel P31) of the first and second pixel groups GR1 and GR2. For example, the data line DL3 is not connected to the second pixel group GR2. Each of the data lines DL1 and DL2 (e.g., at least two data lines) other than the data lines DL0 and DL3 is connected to both the first and second pixel groups GR1 and GR2. The data lines DL1 and DL2 may be disposed between the data lines DL0 and DL3.

For example, the pixels P11, P21 and P31 included in the first pixel group GR1 and the pixels P41, P51 and P61 included in the second pixel group GR2 may be sequentially disposed in the second direction D2. The pixels P11 and P51 may be connected to the data line DL1. The pixels P21 and P61 may be connected to the data line DL2. The pixel P31 may be connected to the data line DL3. The pixel P41 may be connected to the data line DL0.

In addition, a third pixel group GR3 may include three pixels P12, P22 and P32 (e.g., odd-numbered pixels) that are disposed in the second pixel column CL2 and are connected to the first gate line GL1. A fourth pixel group GR4 may include three pixels P42, P52 and P62 (e.g., odd-numbered pixels) that are disposed in the second pixel column CL2 and are connected to the second gate line GL2. A fifth pixel group GR5 may include three pixels P13, P23 and P33 (e.g., odd-numbered pixels) that are disposed in the third pixel column CL3 and are connected to the first gate line GL1. A sixth pixel group GR6 may include three pixels P43, P53 and P63 (e.g., odd-numbered pixels) that are disposed in the third pixel column CL3 and are connected to the second gate line GL2.

The data line DL3 may be connected to the fourth pixel group GR4 (e.g., the pixel P42) of the third and fourth pixel groups GR3 and GR4. For example, the data line DL3 is not connected to the third pixel group GR3. The data line DL6 may be connected to the third pixel group GR3 (e.g., the pixel P32) of the third and fourth pixel groups GR3 and GR4. For example, the data line DL6 is not connected to the fourth pixel group GR4. Each of the data lines DL4 and DL5 (e.g., at least two data lines) other than the data lines DL3 and DL6 may be connected to both the third and fourth pixel groups GR3 and GR4. The data lines DL4 and DL5 may be disposed between the data lines DL3 and DL6. The data line DL6 may be connected to the sixth pixel group GR6 (e.g., the pixel P43) of the fifth and sixth pixel groups GR5 and GR6. For example, the data line DL6 is not connected to the fifth pixel group GR5. The data line DL9 may be connected to the fifth pixel group GR5 (e.g., the pixel P33) of the fifth and sixth pixel groups GR5 and GR6. For example, the data line DL9 is not connected to the sixth pixel group GR6. Each of the data lines DL7 and DL8 (e.g., at least two data lines) other than the data lines DL6 and DL9 may be connected to both the fifth and sixth pixel groups GR5 and GR6. The data lines DL7 and DL8 may be disposed between the data lines DL6 and DL9.

For example, the pixels P12, P22 and P32 included in the third pixel group GR3 and the pixels P42, P52 and P62 included in the fourth pixel group GR4 may be sequentially disposed in the second direction D2. The pixels P12 and P52 may be connected to the data line DL4. The pixels P22 and P62 may be connected to the data line DL5. The pixel P32 may be connected to the data line DL6. The pixel P42 may be connected to the data line DL3. The pixels P13, P23 and P33 included in the fifth pixel group GR5 and the pixels P43, P53 and P63 included in the sixth pixel group GR6 may be sequentially disposed in the second direction D2. The pixels P13 and P53 may be connected to the data line DL7. The pixels P23 and P63 may be connected to the data line DL8. The pixel P33 may be connected to the data line DL9. The pixel P43 may be connected to the data line DL6.

As described above, the pixels P11 and P51 connected to the data line DL1 may be disposed at a single side (e.g., a left side) with respect to the data line DL1. The pixels P21 and P61 connected to the data line DL2 may be disposed at a single side (e.g., a left side) with respect to the data line DL2. The pixels P31 and P42 connected to the data line DL3 may be disposed at both sides (e.g., both left and right sides) with respect to the data line DL3. For example, in the display panel of FIG. 3 according to an embodiment of the present inventive concept, the data lines DL1 and DL2 may be implemented based on the non-alternate scheme, and the data line DL3 may be implemented based on the alternate scheme. In addition, in the display panel of FIG. 3 according to an embodiment of the present inventive concept, the data lines DL4, DL5, DL7 and DL8 may be implemented based on the non-alternate scheme, and the data lines DL6 and DL9 may be implemented based on the alternate scheme. In addition, to drive the pixel P41 that is included in the first pixel column CL1 and is not connected to the data lines DL1, DL2 and DL3 (e.g., to have a structure of the display panel based on the non-alternate scheme and the alternate scheme), the display panel of FIG. 3 according to an embodiment of the present inventive concept may include the additional data line DL0 connected to the pixel P41.

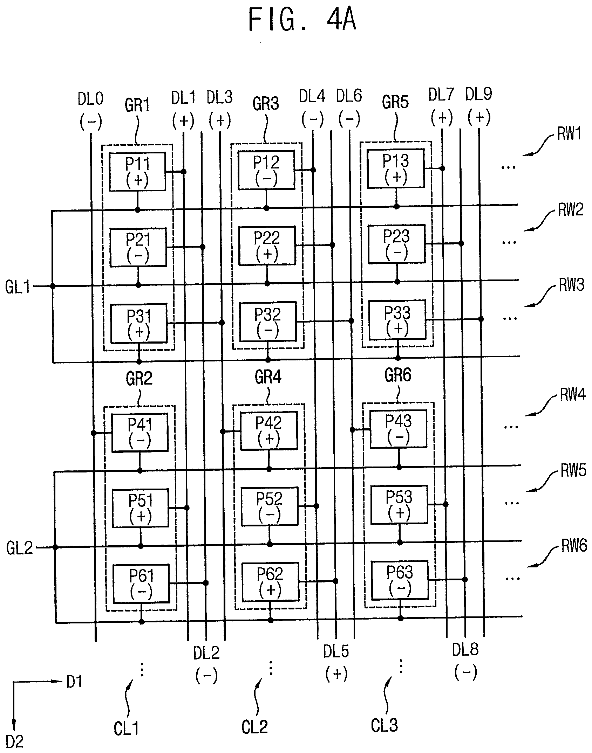

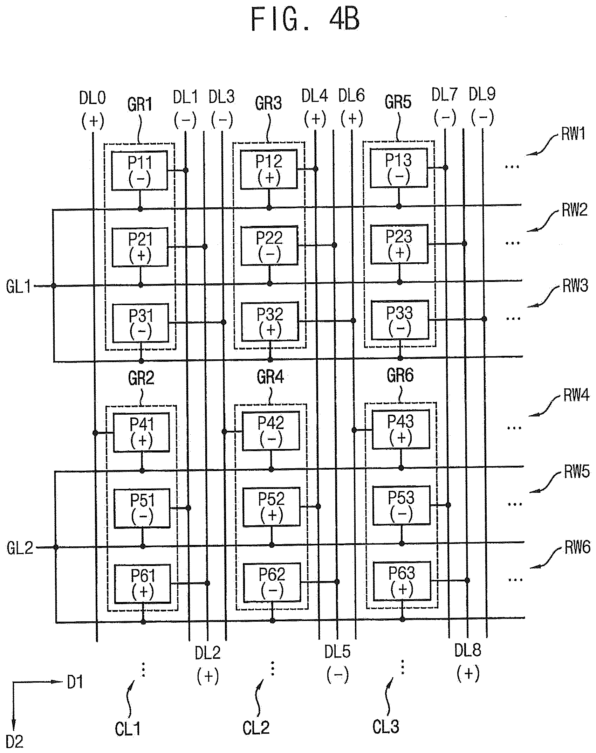

FIGS. 4A and 4B are diagrams for describing an operation of the display panel of FIG. 3 according to an embodiment of the present inventive concept.

As described above with reference to FIG. 1, the display panel according to an embodiment of the present inventive concept may operate based on the inversion driving scheme (e.g., a dot inversion driving scheme). For example, data voltages (e.g., analog data voltage signals) having a first polarity and data voltages having a second polarity different from the first polarity may be alternately applied to the plurality of data lines DL0 through DL9. Polarities of the data voltages may be inverted by a unit of frame.

For example, during a first frame, data voltages having a negative polarity (-) may be applied to the data lines DL0, DL2, DL4, DL6 and DL8, and data voltages having a positive polarity (+) may be applied to the data lines DL1, DL3, DL5, DL7 and DL9, as illustrated in FIG. 4A. During a first horizontal period of the first frame, the first gate line GL1 may be enabled (e.g., a first gate signal applied to the first gate line GL1 may be activated), the data voltages having the positive polarity may be applied to the pixels P11, P31, P22, P13 and P33, and the data voltages having the negative polarity may be applied to the pixels P21, P12, P32 and P23. During a second horizontal period of the first frame subsequent to the first horizontal period of the first frame, the second gate line GL2 may be enabled (e.g., a second gate signal applied to the second gate line GL2 may be activated), the data voltages having the positive polarity may be applied to the pixels P51, P42, P62 and P53, and the data voltages having the negative polarity may be applied to the pixels P41, P61, P52, P43 and P63.

During a second frame subsequent to the first frame, data voltages having the positive polarity may be applied to the data lines DL0, DL2, DL4, DL6 and DL8, and data voltages having the negative polarity may be applied to the data lines DL1, DL3, DL5, DL7 and DL9, as illustrated in FIG. 4B. During a first horizontal period of the second frame, the first gate line GL1 may be enabled, the data voltages having the negative polarity may be applied to the pixels P11, P31, P22, P13 and P33, and the data voltages having the positive polarity may be applied to the pixels P21, P12, P32 and P23. During a second horizontal period of the second frame subsequent to the first horizontal period of the second frame, the second gate line GL2 may be enabled, the data voltages having the negative polarity may be applied to the pixels P51, P42, P62 and P53, and the data voltages having the positive polarity may be applied to the pixels P41, P61, P52, P43 and P63.

In the display panel of FIG. 3 according to an embodiment of the present inventive concept, adjacent pixels may have different polarities from each other. For example, adjacent pixels that are disposed in boundaries of the pixel groups GR1 through GR6 may have different polarities from each other. For example, the pixel P31 in the first pixel group GR1 and the pixel P41, which is adjacent to the pixel P31, in the second pixel group GR2 may have different polarities from each other, the pixel P32 in the third pixel group GR3 and the pixel P42 in the fourth pixel group GR4 may have different polarities from each other, and the pixel P33 in the fifth pixel group GR5 and the pixel P43 in the sixth pixel group GR6 may have different polarities from each other. Accordingly, adjacent horizontal rows (e.g., the pixel rows RW3 and RW4) might not have the same polarity as each other, and thus, a horizontal spot line on the display panel may be prevented.

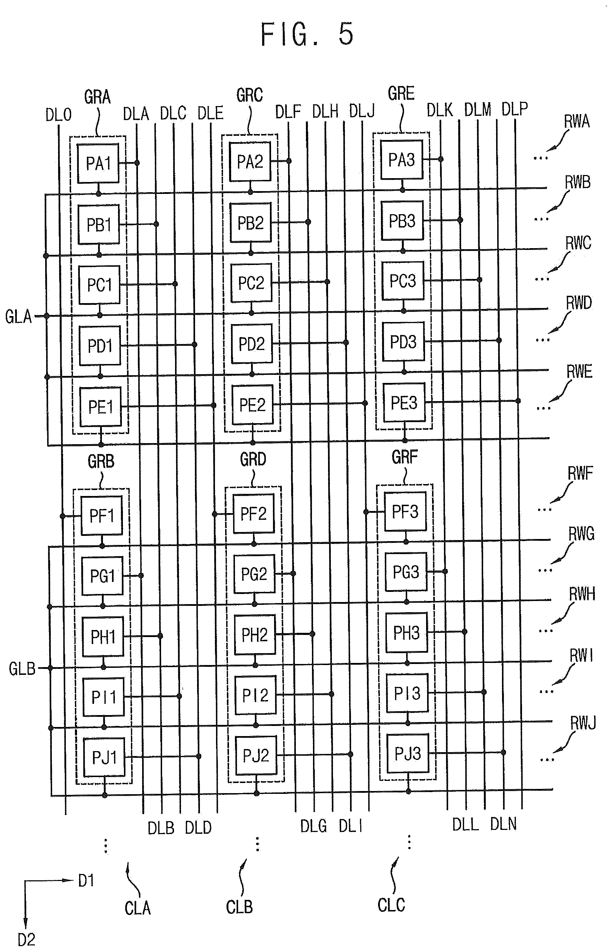

FIG. 5 is a plan view illustrating a display panel according to an embodiment of the present inventive concept.

Referring to FIG. 5, the display panel includes a plurality of gate lines GLA and GLB, a plurality of data lines DL0, DLA, DLB, DLC, DLD, DLE, DLF, DLG, DLH, DLI, DLJ, DLK, DLL, DLM, DLN and DLP, and a plurality of pixels PA1, PB1, PC1, PD1, PE1, PF1, PG1, PH1, PI1, PJ1, PA2, PB2, PC2, PD2, PE2, PF2, PG2, PH2, PI2, PJ2, PA3, PB3, PC3, PD3, PE3, PF3, PG3, PH3, PI3 and PJ3. A portion of the display panel is illustrated in FIG. 5 for convenience of description, but the present inventive concept is not limited thereto.

The plurality of gate lines GLA and GLB extends in a first direction D1. A plurality of pixel rows RWA, RWB, RWC, RWD, RWE, RWF, RWG, RWH, RWI and RWJ may be defined by the plurality of gate lines GLA and GLB. The plurality of data lines DL0 through DLP extends in a second direction D2 crossing the first direction D1. A plurality of pixel columns CLA, CLB and CLC may be defined by the plurality of data lines DL0 through DLP.

Each of the plurality of pixels PA1 through PJ3 may be disposed in a respective one of the plurality of pixel rows RWA through RWJ and a respective one of the plurality of pixel columns CLA through CLC.

For example, the pixels PA1, PB1, PC1, PD1, PE1, PF1, PG1, PH1, PI1 and PJ1 may be disposed in the first pixel column CLA. The pixels PA2, PB2, PC2, PD2, PE2, PF2, PG2, PH2, PI2 and PJ2 may be disposed in the second pixel column CLB. The pixels PA3, PB3, PC3, PD3, PE3, PF3, PG3, PH3, PI3 and PJ3 may be disposed in the third pixel column CLC.

The pixels PA1, PA2 and PA3 may be disposed in the first pixel row RWA. The pixels PB1, PB2 and PB3 may be disposed in the second pixel row RWB. The pixels PC1, PC2 and PC3 may be disposed in the third pixel row RWC. The pixels PD1, PD2 and PD3 may be disposed in the fourth pixel row RWD. The pixels PE1, PE2 and PE3 may be disposed in the fifth pixel row RWE. The pixels PF1, PF2 and PF3 may be disposed in the sixth pixel row RWF. The pixels PG1, PG2 and PG3 may be disposed in the seventh pixel row RWG. The pixels PH1, PH2 and PH3 may be disposed in the eighth pixel row RWH. The pixels PI1, PI2 and PI3 may be disposed in the ninth pixel row RWI. The pixels PJ1, PJ2 and PJ3 may be disposed in the tenth pixel row RWJ.

Each of the pixels PA1 through PJ3 may be connected to a respective one of the plurality of gate lines GLA and GLB and a respective one of the plurality of data lines DL0 through DLP. Pixels disposed in five adjacent pixel rows may be connected to a single gate line. Some of the data lines DLA through DLP may be connected to some of the pixels PA1 through PJ3 based on the non-alternate scheme, and the other of the data lines DLA through DLP may be connected to the other of the pixels PA1 through PJ3 based on the alternate scheme.

A first pixel group GRA includes five pixels PA1, PB1, PC1, PD1 and PE1 (e.g., odd-numbered pixels) that are disposed in the first pixel column CLA and are connected to the first gate line GLA. A second pixel group GRB includes five pixels PF1, PG1, PH1, PI1 and PJ1 (e.g., odd-numbered pixels) that are disposed in the first pixel column CLA and are connected to the second gate line GLB. The data line DL0 is connected to the second pixel group GRB (e.g., the pixel PF1) of the first and second pixel groups GRA and GRB. For example, the data line DL0 is not connected to the first pixel group GRA. The data line DLE is connected to the first pixel group GRA (e.g., the pixel PE1) of the first and second pixel groups GRA and GRB. For example, the data line DLE is not connected to the second pixel group GRB. Four data lines DLA, DLB, DLC and DLD (e.g., at least two data lines of the data lines DLA, DLB, DLC and DLD) other than the data lines DL0 and DLE are connected to both the first and second pixel groups GRA and GRB. The data lines DLA, DLB, DLC and DLD may be disposed between the data lines DL0 and DLE.

For example, the pixels PA1, PB1, PC1, PD1 and PE1 included in the first pixel group GRA and the pixels PF1, PG1, PH1, PI1 and PJ1 included in the second pixel group GRB may be sequentially disposed in the second direction D2. The pixels PA1 and PG1 may be connected to the data line DLA. The pixels PB1 and PH1 may be connected to the data line DLB. The pixels PC1 and PI1 may be connected to the data line DLC. The pixels PD1 and PJ1 may be connected to the data line DLD. The pixel PE1 may be connected to the data line DLE. The pixel PF1 may be connected to the data line DL0.

In addition, a third pixel group GRC may include five pixels PA2, PB2, PC2, PD2 and PE2 (e.g., odd-numbered pixels) that are disposed in the second pixel column CLB and are connected to the first gate line GLA. A fourth pixel group GRD may include five pixels PF2, PG2, PH2, PI2 and PJ2 (e.g., odd-numbered pixels) that are disposed in the second pixel column CLB and are connected to the second gate line GLB. A fifth pixel group GRE may include five pixels PA3, PB3, PC3, PD3 and PE3 (e.g., odd-numbered pixels) that are disposed in the third pixel column CLC and are connected to the first gate line GLA. A sixth pixel group GRF may include five pixels PF3, PG3, PH3, PI3 and PJ3 (e.g., odd-numbered pixels) that are disposed in the third pixel column CLC and are connected to the second gate line GLB.

The data line DLE may be connected to the fourth pixel group GRD (e.g., the pixel PF2) of the third and fourth pixel groups GRC and GRD. For example, the data line DLE might not be connected to the third pixel group GRC. The data line DLJ may be connected to the third pixel group GRC (e.g., the pixel PE2) of the third and fourth pixel groups GRC and GRD. For example, the data line DLJ might not be connected to the fourth pixel group GRD. Four data lines DLF, DLG, DLH and DLI (e.g., at least two data lines) other than the data lines DLE and DLJ may be connected to both the third and fourth pixel groups GRC and GRD. The data lines DLF, DLG, DLH and DLI may be disposed between the data lines DLE and DLJ. The data line DLJ may be connected to the sixth pixel group GRF (e.g., the pixel PF3) of the fifth and sixth pixel groups GRE and GRF. For example, the data line DLJ might not be connected to the fifth pixel group GRE. The data line DLP may be connected to the fifth pixel group GRE (e.g., the pixel PE3) of the fifth and sixth pixel groups GRE and GRF. For example, the data line DLP might not be connected to the sixth pixel group GRF. Four data lines DLK, DLL, DLM and DLN (e.g., at least two data lines of the data lines DLK, DLL, DLM and DLN) other than the data lines DLJ and DLP may be connected to both the fifth and sixth pixel groups GRE and GRF. The data lines DLK, DLL, DLM and DLN may be disposed between the data lines DLJ and DLP.

For example, the pixels PA2, PB2, PC2, PD2 and PE2 included in the third pixel group GRC and the pixels PF2, PG2, PH2, PI2 and PJ2 included in the fourth pixel group GRD may be sequentially disposed in the second direction D2. The pixels PA2 and PG2 may be connected to the data line DLF. The pixels PB2 and PH2 may be connected to the data line DLG. The pixels PC2 and PI2 may be connected to the data line DLH. The pixels PD2 and PJ2 may be connected to the data line DLI. The pixel PE2 may be connected to the data line DLJ. The pixel PF2 may be connected to the data line DLE. The pixels PA3, PB3, PC3, PD3 and PE3 included in the fifth pixel group GRE and the pixels PF3, PG3, PH3, PI3 and PJ3 included in the sixth pixel group GRF may be sequentially disposed in the second direction D2. The pixels PA3 and PG3 may be connected to the data line DLK. The pixels PB3 and PH3 may be connected to the data line DLL. The pixels PC3 and PI3 may be connected to the data line DLM. The pixels PD3 and PJ3 may be connected to the data line DLN. The pixel PE3 may be connected to the data line DLP. The pixel PF3 may be connected to the data line DLJ.

As described above, in the display panel of FIG. 5 according to an embodiment of the present inventive concept, the data lines DLA, DLB, DLC, DLD, DLF, DLG, DLH, DLI, DLK, DLL, DLM and DLN may be implemented based on the non-alternate scheme, and the data lines DLE, DLJ and DLP may be implemented based on the alternate scheme. In addition, to drive the pixel PF1 that is included in the first pixel column CLA and is not connected to the data lines DLA, DLB, DLC, DLD and DLE (e.g., to have a structure of the display panel based on the non-alternate scheme and the alternate scheme), the display panel of FIG. 5 according to an exemplary embodiment of the present inventive concept may include the additional data line DL0 connected to the pixel PF1.

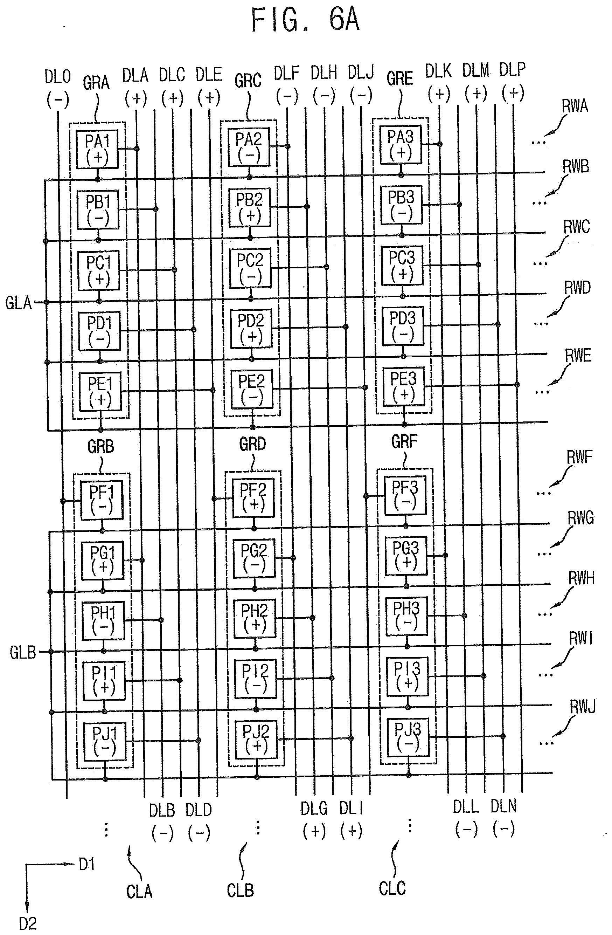

FIGS. 6A and 6B are diagrams for describing an operation of the display panel of FIG. 5 according to an embodiment of the present inventive concept.

As described above with reference to FIG. 1, the display panel according to an exemplary embodiment of the present inventive concept may operate based on the inversion driving scheme (e.g., the dot inversion driving scheme). For example, data voltages (e.g., analog data voltage signals) having a first polarity and data voltages having a second polarity different from the first polarity may be alternately applied to the plurality of data lines DL0 through DLP. Polarities of the data voltages may be inverted by a unit of frame.

For example, during a first frame, data voltages having a negative polarity (-) may be applied to the data lines DL0, DLB, DLD, DLF, DLH, DLJ, DLL and DLN, and data voltages having a positive polarity (+) may be applied to the data lines DLA, DLC, DLE, DLG, DLI, DLK, DLM and DLP, as illustrated in FIG. 6A. During a first horizontal period of the first frame, the first gate line GLA may be enabled (e.g., a first gate signal applied to the first gate line GLA may be activated), the data voltages having the positive polarity may be applied to the pixels PA1, PC1, PE1, PB2, PD2, PA3, PC3 and PE3, and the data voltages having the negative polarity may be applied to the pixels PB1, PD1, PA2, PC2, PE2, PB3 and PD3. During a second horizontal period of the first frame subsequent to the first horizontal period of the first frame, the second gate line GLB may be enabled (e.g., a second gate signal applied to the second gate line GLB may be activated), the data voltages having the positive polarity may be applied to the pixels PG1, PI1, PF2, PH2, PJ2, PG3 and PI3, and the data voltages having the negative polarity may be applied to the pixels PF1, PH1, PJ1, PG2, PI2, PF3, PH3 and PJ3.

During a second frame subsequent to the first frame, data voltages having the positive polarity may be applied to the data lines DL0, DLB, DLD, DLF, DLH, DLJ, DLL and DLN, and data voltages having the negative polarity may be applied to the data lines DLA, DLC, DLE, DLG, DLI, DLK, DLM and DLP, as illustrated in FIG. 6B. During a first horizontal period of the second frame, the first gate line GLA may be enabled, the data voltages having the negative polarity may be applied to the pixels PA1, PC1, PE1, PB2, PD2, PA3, PC3 and PE3, and the data voltages having the positive polarity may be applied to the pixels PB1, PD1, PA2, PC2, PE2, PB3 and PD3. During a second horizontal period of the second frame subsequent to the first horizontal period of the second frame, the second gate line GLB may be enabled, the data voltages having the negative polarity may be applied to the pixels PG1, PI1, PF2, PH2, PJ2, PG3 and PI3, and the data voltages having the positive polarity may be applied to the pixels PF1, PH1, PJ1, PG2, PI2, PF3, PH3 and PJ3.

In the display panel of FIG. 5 according to an embodiment of the present inventive concept, adjacent pixels may have different polarities from each other. For example, adjacent pixels that are disposed in boundaries of the pixel groups GRA through GRF may have different polarities from each other. For example, the pixel PE1 in the first pixel group GRA and the pixel PF1 in the second pixel group GRB may have different polarities from each other, the pixel PE2 in the third pixel group GRC and the pixel PF2 in the fourth pixel group GRD may have different polarities from each other, and the pixel PE3 in the fifth pixel group GRE and the pixel PF3 in the sixth pixel group GRF may have different polarities from each other. Accordingly, adjacent horizontal rows (e.g., pixel rows RWE and RWF) might not have the same polarity as each other, and thus, a horizontal spot line on the display panel may be prevented.

In some embodiments of the present inventive concept, when the display panel 100 has an RGB structure, the plurality of pixels (e.g., the pixels P11 through P63 in FIG. 3 or the pixels PA1 through PJ3 in FIG. 5) may include a red pixel outputting a red light, a green pixel outputting a green light and a blue pixel outputting a blue light.

In some embodiments of the present inventive concept, when the display panel 100 has an RGBW structure, the plurality of pixels (e.g., the pixels P11 through P63 in FIG. 3 or the pixels PA1 through PJ3 in FIG. 5) may include a red pixel outputting a red light, a green pixel outputting a green light, a blue pixel outputting a blue light and a white pixel outputting a white light.

Although the embodiments of the present inventive concept are described based on the examples where three or five adjacent horizontal rows are driven by a single gate line, the present inventive concept can be employed in an example where any odd-numbered adjacent horizontal rows are driven by a single gate line. Although the embodiments of the present inventive concept are described based on the example of the non-alternate scheme where pixels connected to one data line are disposed at only left side with respect to the one data line, the present inventive concept can be employed to an example of the non-alternate scheme where pixels connected to one data line are disposed at only right side with respect to the one data line.

The above described embodiments may be used in a display panel, a display apparatus and/or a system including the display apparatus, such as a mobile phone, a smart phone, a personal digital assistants (PDA), a portable multimedia player (PMP), a digital camera, a digital television, a set-top box, a music player, a portable game console, a navigation device, a personal computer (PC), a server computer, a workstation, a tablet computer, a laptop computer, a smart card, a printer, etc.

The foregoing is illustrative of embodiments of the present inventive concept and the present inventive concept should not be construed as being limited to these embodiments. Although a few embodiment of the present inventive concept have been described, it will be understood that many modifications in form and details may be made therein without departing from the scope of the claims.

## Claims

1. A display panel (100) comprising:
a plurality of gate lines extending in a first direction (D1), the plurality of gate lines including a first gate line (GL1) and a second gate line (GL2) that are adjacent to each other;
a plurality of data lines extending in a second direction (D2) crossing the first direction (D1), the plurality of data lines including a first data line (DL0), a second data line (DL1), a third data line (DL2), and a fourth data line (DL3) that are sequentially arranged; and
a plurality of pixels each of which is connected to one of the plurality of gate lines and one of the plurality of data lines, the plurality of pixels including first, second and third pixels (P11, P21, P31) connected to the first gate line (GL1) and fourth, fifth, and sixth pixels (P41, P51, P61) connected to the second gate line (GL2),
wherein the first, second, and third pixels (P11, P21, P31) are included in a first pixel group (GR1) and disposed in a first pixel column (CL1) that is arranged parallel with the second direction (D2),
wherein the fourth, fifth, and sixth pixels (P41, P51, P61) are included in a second pixel group (GR2) and disposed in the first pixel column (CL1),
wherein the first data line (DL0) is connected to only the second pixel group (GR2) among the first and second pixel groups (GR1, GR2) and to the fourth pixel (P41) included in the second pixel group (GR2),
wherein the second data line (DL1) is connected to both the first and second pixel groups (GR1, GR2) and to the first pixel (P11) included in the first pixel group (GR1) and the fifth pixel (P51) included in the second pixel group (GR2),
wherein the third data line (DL2) is connected to both the first and second pixel groups (GR1, GR2) and to the second pixel (P21) included in the first pixel group (GR1) and the sixth pixel (P61) included in the second pixel group (GR2), and
wherein the fourth data line (DL3) is connected to only the first pixel group (GR1) among the first and second pixel groups (GR1, GR2) and to the third pixel (P31) included in the first pixel group (GR1),
wherein the plurality of data lines further includes a fifth data line (DL4), a sixth data line (DL5) and a seventh data line (DL6),
wherein the plurality of pixels further includes seventh, eighth and ninth pixels (P12, P22, P32) connected to the first gate line (GL1) and tenth, eleventh and twelfth pixels (P42, P52, P62) connected to the second gate line (GL2),
wherein the seventh, eighth and ninth pixels (P12, P22, P32) are included in a third pixel group (GR3) and disposed in a second pixel column (CL2) that is adjacent to the first pixel column (CL1) and arranged parallel with the second direction (D2),
wherein the tenth, eleventh and twelfth (P42, P52, P62) are included in a fourth pixel group (GR4) and disposed in the second pixel column (CL2),
wherein the fourth data line (DL3) is connected to only the fourth pixel group (GR4) among the third and fourth pixel groups (GR3, GR4) and to the tenth pixel (P42) included in the fourth pixel group (GR4),
wherein the fifth data line (DL4) is connected to both the third and fourth pixel groups (GR3, GR4) and to the seventh pixel (P12) included in the third pixel group (GR3) and the eleventh pixel (P52) included in the fourth pixel group (GR4),
wherein the sixth data line (DL5) is connected to both the third and fourth pixel groups (GR3, GR4) and to the eighth pixel (P22) included in the third pixel group (GR3) and the twelfth pixel (P62) included in the fourth pixel group (GR4), and
wherein the seventh data line (DL6) is connected to only the third pixel group (GR3) among the third and fourth pixel groups (GR3, GR4) and to the ninth pixel (P32) included in the third pixel group (GR3),
wherein the plurality of data lines further includes an eighth data line (DL7), a ninth data line (DL8) and a tenth data line (DL9),
wherein the plurality of pixels further includes thirteenth, fourteenth, and fifteenth pixels (P13, P23, P33) connected to the first gate line (GL1) and sixteenth, seventeenth, and eighteenth pixels (P43, P53, P63) connected to the second gate line (GL2),
wherein the thirteenth, fourteenth, and fifteenth pixels (P13, P23, P32) are included in a fifth pixel group (GR5) and disposed in a third pixel column (CL3) that is adjacent to the second pixel column (CL2) and arranged parallel with the second direction (D2),
wherein the sixteenth, seventeenth, and eighteenth pixels (P43, P53, P63) are included in a sixth pixel group (GR6) and disposed in the third pixel column (CL3),
wherein the seventh data line (DL6) is connected to only the sixth pixel group (GR6) among the fifth and sixth pixel groups (GR5, GR6) and to the sixteenth pixel (P43) included in the sixth pixel group (GR6),
wherein the eighth data line (DL7) is connected to both the fifth and sixth pixel groups (GR5, GR6) and to the thirteenth pixel (P13) included in the fifth pixel group (GR5) and the seventeenth pixel (P53) included in the sixth pixel group (GR6),
wherein the ninth data line (DL8) is connected to both the fifth and sixth pixel groups (GR5, GR6) and to the fourteenth pixel (P23) included in the fifth pixel group (GR5) and the eighteenth pixel (P63) included in the sixth pixel group (GR6), and
wherein the tenth data line (DL9) is connected to only the fifth pixel group (GR5) among the fifth and sixth pixel groups (GR3, GR4) and to the fifteenth pixel (P33) included in the fifth pixel group (GR5),
wherein the first, seventh, and thirteenth pixels (P11, P12, P13) are disposed in a first pixel row (RW1), the second, eighth, and fourteenth pixels (P21 P22, P23) are disposed in a second pixel row (RW2), the third, ninth, and fifteenth pixels (P31, P32, P33) are disposed in a third pixel row (RW3), the fourth, tenth, and sixteenth pixels (P41, P42, P43) are disposed in a fourth pixel row (RW4), the fifth, eleventh, and seventeenth pixels (P51, P52, P53) are disposed in a fifth pixel row (RW5), and the sixth, twelfth, and eighteenth pixel (P61, P62, P63) are included in a sixth pixel row (RW6),
wherein the first and fifth pixels (P11, P51) are disposed at a single side with respect to the second data line (DL1), the second and sixth pixels (P21, P61) are disposed at a single side with respect to the third data line (DL2), the third and tenth pixels (P31, P42) are disposed one either side of the fourth data line (DL3), the seventh and eleventh pixels (P12, P52) are disposed on a single side of the fifth data line (DL4), the eighth and twelfth pixels (P22, P62) are disposed on a single side of the sixth data line (DL5), and ninth and sixteenth pixels (P32, P43) are disposed one either side of the seventh data line (DL6), the thirteenth and seventeenth pixels (P13, P53) are disposed on a single side of the eighth data line (DL7), the fourteenth and eighteenth pixels (P23, P63) are disposed on a single side of the ninth data line (DL8), and the fifteenth pixel (P33) is disposed on a single side of the tenth data line (DL9).

2. A display panel (100) according to claim 1, wherein the plurality of pixels includes a red pixel outputting a red light, a green pixel outputting a green light, and a blue pixel outputting a blue light.

3. A display apparatus comprising:
a timing controller (200) configured to control an operation of a display panel (100) and to generate output image data (RGBD') based on input image data (RGBD); and
a display panel (100) configured to display an image based on the output image data (RGBD'),
the display panel (100) being set out in claim 1 or claim 2.

## Patentansprüche

1. Anzeigefeld (100), umfassend:
eine Mehrzahl Gate-Leitungen, die sich in einer ersten Richtung (D1) erstrecken, wobei die Mehrzahl Gate-Leitungen eine erste Gate-Leitung (GL1) und eine zweite Gate-Leitung (GL2), die aneinander angrenzen, umfasst,
eine Mehrzahl Datenleitungen, die sich in einer zweiten Richtung (D2), die sich mit der ersten Richtung (D1) kreuzt, erstrecken, wobei die Mehrzahl Datenleitungen eine erste Datenleitung (DL0), eine zweite Datenleitung (DL1), eine dritte Datenleitung (DL2) und eine vierte Datenleitung (DL3), die aufeinanderfolgend angeordnet sind, umfasst, und
eine Mehrzahl Pixel, die jeweils mit einer der Mehrzahl Gate-Leitungen und einer der Mehrzahl Datenleitungen verbunden sind, wobei die Mehrzahl Pixel erste, zweite und dritte Pixel (P11, P21, P31) umfasst, die mit der ersten Gate-Leitung (GL1) verbunden sind, und vierte, fünfte und sechste Pixel (P41, P51, P61), die mit der zweiten Gate-Leitung (GL2) verbunden sind,
wobei die ersten, zweiten und dritten Pixel (P11, P21, P31) in einer ersten Pixelgruppe (GR1) enthalten sind und in einer ersten Pixelspalte (CL1) angeordnet sind, die parallel zur zweiten Richtung (D2) angeordnet sind,
wobei die vierten, fünften und sechsten Pixel (P41, P51, P61) in einer zweiten Pixelgruppe (GR2) enthalten sind und in der ersten Pixelspalte (CL1) angeordnet sind,
wobei die erste Datenleitung (DL0) von den ersten und zweiten Pixelgruppen (GR1, GR2) nur mit der zweiten Pixelgruppe, sowie mit dem in der zweiten Pixelgruppe (GR2) enthaltenen vierten Pixel (P41) verbunden ist,
wobei die zweite Datenleitung (DL1) sowohl mit den ersten als auch mit den zweiten Pixelgruppen (GR1, GR2) und mit dem in der ersten Pixelgruppe (GR1) enthaltenen ersten Pixel (P11) und dem in der zweiten Pixelgruppe (GR2) enthaltenen fünften Pixel (P51) verbunden ist,
wobei die dritte Datenleitung (DL2) sowohl mit den ersten als auch mit den zweiten Pixelgruppen (GR1, GR2) und mit dem in der ersten Pixelgruppe (GR1) enthaltenen zweiten Pixel (P21) und dem in der zweiten Pixelgruppe (GR2) enthaltenen sechsten Pixel (P61) verbunden ist,
wobei die vierte Datenleitung (DL3) von den ersten und zweiten Pixelgruppen (GR1, GR2) nur mit der ersten Pixelgruppe, sowie mit dem in der ersten Pixelgruppe (GR1) enthaltenen dritten Pixel (P31) verbunden ist,
wobei die Mehrzahl Datenleitungen ferner eine fünfte Datenleitung (DL4), eine sechste Datenleitung (DL5) und eine siebente Datenleitung (DL6) umfasst,
wobei die Mehrzahl Pixel ferner siebente, achte und neunte Pixel (P12, P22, P32) umfasst, die mit der ersten Gate-Leitung (GL1) verbunden sind, und zehnte, elfte und zwölfte Pixel (P42, P52, P62) umfasst, die mit der zweiten Gate-Leitung (GL2) verbunden sind,
wobei die siebenten, achten und neunten Pixel (P12, P22, P32) in einer dritten Pixelgruppe (GR3) enthalten und in einer zweiten Pixelspalte (CL2) angeordnet sind, die an die erste Pixelspalte (CL1) angrenzt und parallel zur zweiten Richtung (D2) angeordnet ist,
wobei die zehnten, elften und zwölften (P42, P52, P62) (sic!) in einer vierten Pixelgruppe (GR4) enthalten und in der zweiten Pixelspalte (CL2) angeordnet sind,
wobei die vierte Datenleitung (DL3) von den dritten und vierten Pixelgruppen (GR3, GR4) nur mit der vierten Pixelgruppe (GR4), sowie mit dem in der vierten Pixelgruppe (GR4) enthaltenen zehnten Pixel (P42) verbunden ist,
wobei die fünfte Datenleitung (DL4) sowohl mit den dritten als auch mit den vierten Pixelgruppen (GR3, GR4) und mit dem in der dritten Pixelgruppe (GR3) enthaltenen siebenten Pixel (P12) und dem in der vierten Pixelgruppe (GR4) enthaltenen elften Pixel (P52) verbunden ist,
wobei die sechste Datenleitung (DL5) sowohl mit den dritten als auch mit den vierten Pixelgruppen (GR3, GR4) und mit dem in der dritten Pixelgruppe (GR3) enthaltenen achten Pixel (P22) und dem in der vierten Pixelgruppe (GR4) enthaltenen zwölften Pixel (P62) verbunden ist,
wobei die siebente Datenleitung (DL6) von den dritten und vierten Pixelgruppen (GR3, GR4) nur mit der dritten Pixelgruppe (GR3), sowie mit dem in der dritten Pixelgruppe (GR3) enthaltenen neunten Pixel (P32) verbunden ist,
wobei die Mehrzahl Datenleitungen ferner eine achte Datenleitung (DL7), eine neunte Datenleitung (DL8) und eine zehnte Datenleitung (DL9) umfasst,
wobei die Mehrzahl Pixel ferner dreizehnte, vierzehnte und fünfzehnte Pixel (P13, P23, P33) umfasst, die mit der ersten Gate-Leitung (GL1) verbunden sind, und sechszehnte, siebzehnte und achtzehnte Pixel (P43, P53, P63) umfasst, die mit der zweiten Gate-Leitung (GL2) verbunden sind,
wobei die dreizehnten, vierzehnten und fünfzehnten Pixel (P13, P23, P32) in einer fünften Pixelgruppe (GR5) enthalten und in einer dritten Pixelspalte (CL3) angeordnet sind, die an die zweite Pixelspalte (CL2) angrenzt und parallel zur zweiten Richtung (D2) angeordnet ist,
wobei die sechszehnten, siebzehnten und achtzehnten Pixel (P43, P53, P63) in einer sechsten Pixelgruppe (GR6) enthalten sind und in der dritten Pixelspalte (CL3) angeordnet sind,
wobei die siebente Datenleitung (DL6) von den fünften und sechsten Pixelgruppen (GR5, GR6) nur mit der sechsten Pixelgruppe (GR6), sowie mit dem in der sechsten Pixelgruppe (GR6) enthaltenen sechszehnten Pixel (P43) verbunden ist,
wobei die achte Datenleitung (DL7) sowohl mit den fünften als auch mit den sechsten Pixelgruppen (GR5, GR6) und mit dem in der fünften Pixelgruppe (GR5) enthaltenen dreizehnten Pixel (P53) und dem in der sechsten Pixelgruppe (GR6) enthaltenen siebzehnten Pixel (P53) verbunden ist,
wobei die neunte Datenleitung (DL8) sowohl mit den fünften als auch mit den sechsten Pixelgruppen (GR5, GR6) und mit dem in der fünften Pixelgruppe (GR5) enthaltenen vierzehnten Pixel (P23) und dem in der sechsten Pixelgruppe (GR6) enthaltenen achtzehnten Pixel (P63) verbunden ist,
wobei die zehnte Datenleitung (DL9) von den fünften und sechsten Pixelgruppen (GR3, GR4) nur mit der fünften Pixelgruppe (GR5), sowie mit dem in der fünften Pixelgruppe (GR5) enthaltenen fünfzehnten Pixel (P33) verbunden ist,
wobei die ersten, siebenten und dreizehnten Pixel (P11, P12, P13) in einer ersten Pixelzeile (RW1) angeordnet sind, die zweiten, achten und vierzehnten Pixel (P21, P22, P23) in einer zweiten Pixelzeile (RW2) angeordnet sind, die dritten, neunten und fünfzehnten Pixel (P31, P32, P33) in einer dritten Pixelzeile (RW3) angeordnet sind, die vierten, zehnten und sechszehnten Pixel (P41, P42, P43) in einer vierten Pixelzeile (RW4) angeordnet sind, die fünften, elften und siebzehnten Pixel (P51, P52, P53) in einer fünften Pixelzeile (RW5) angeordnet sind und die sechsten, zwölften und achtzehnten Pixel (P61, P62, P63) in einer sechsten Pixelzeile (RW6) angeordnet sind,
wobei die ersten und fünften Pixel (P11, P51) auf einer Seite in Bezug auf die zweite Datenleitung (DL1) angeordnet sind, die zweiten und sechsten Pixel (P21, P61) auf einer Seite in Bezug auf die dritte Datenleitung (DL2) angeordnet sind, die dritten und zehnten Pixel (P31, P42) beiderseits der vierten Datenleitung (DL3) angeordnet sind, die siebenten und elften Pixel (P12, P52) auf einer Seite der fünften Datenleitung (DL4) angeordnet sind, die achten und zwölften Pixel (P22, P62) auf einer Seite der sechsten Datenleitung (DL5) angeordnet sind und die neunten und sechszehnten Pixel (P32, P43) beiderseits der siebenten Datenleitung (DL6) angeordnet sind, die dreizehnten und siebzehnten Pixel (P13, P53) auf einer Seite der achten Datenleitung (DL7) angeordnet sind, die vierzehnten und achtzehnten Pixel (P23, P63) auf einer Seite der neunten Datenleitung (DL8) angeordnet sind und das fünfzehnte Pixel (P33) auf einer Seite der zehnten Datenleitung (DL9) angeordnet ist.

2. Anzeigefeld (100) nach Anspruch 1, wobei die Mehrzahl Pixel ein rotes Pixel, das ein rotes Licht ausgibt, ein grünes Pixel, das ein grünes Licht ausgibt, und ein blaues Pixel, das ein blaues Licht ausgibt, umfasst,

3. Anzeigevorrichtung, umfassend:
einen Timing-Controller (200), der derart konfiguriert ist, dass er einen Betrieb eines Anzeigefelds (100) steuert und Ausgabebilddaten (RGBD') anhand eingegebener Bilddaten (RGBD) erzeugt, und
ein Anzeigefeld (100), das derart konfiguriert ist, dass es auf der Grundlage der Ausgabebilddaten (RGBD') ein Bild anzeigt,
wobei das Anzeigefeld (100) in Anspruch 1 oder 2 dargestellt ist.

## Revendications

1. Panneau d'affichage (100) comprenant :
une pluralité de lignes de grille qui s'étendent dans une première direction (D1), la pluralité de lignes de grille incluant une première ligne de grille (GL1) et une seconde ligne de grille (GL2) qui sont adjacentes l'une à l'autre ;
une pluralité de lignes de données qui s'étendent dans une seconde direction (D2) qui croise la première direction (D1), la pluralité de lignes de données incluant une première ligne de données (DL0), une deuxième ligne de données (DL1), une troisième ligne de données (DL2) et une quatrième ligne de données (DL3) qui sont agencées de façon séquentielle ; et
une pluralité de pixels dont chacun est connecté à l'une de la pluralité de lignes de grille et à l'une de la pluralité de lignes de données, la pluralité de pixels incluant des premier, deuxième et troisième pixels (P11, P21, P31) qui sont connectés à la première ligne de grille (GL1) et des quatrième, cinquième et sixième pixels (P41, P51, P61) qui sont connectés à la seconde ligne de grille (GL2) ; dans lequel :
les premier, deuxième et troisième pixels (P11, P21, P31) sont inclus dans un premier groupe de pixels (GR1) et sont disposés dans une première colonne de pixels (CL1) qui est agencée parallèlement à la seconde direction (D2) ; dans lequel :
les quatrième, cinquième et sixième pixels (P41, P51, P61) sont inclus dans un deuxième groupe de pixels (GR2) et sont disposés dans la première colonne de pixels (CL1) ; dans lequel :
la première ligne de données (DL0) est connectée à seulement le deuxième groupe de pixels (GR2) parmi les premier et deuxième groupes de pixels (GR1, GR2) et au quatrième pixel (P41) qui est inclus dans le deuxième groupe de pixels (GR2) ; dans lequel :
la deuxième ligne de données (DL1) est connectée à la fois aux premier et deuxième groupes de pixels (GR1, GR2) et au premier pixel (P11) qui est inclus dans le premier groupe de pixels (GR1) et au cinquième pixel (P51) qui est inclus dans le deuxième groupe de pixels (GR2) ; dans lequel :
la troisième ligne de données (DL2) est connectée à la fois aux premier et deuxième groupes de pixels (GR1, GR2) et au deuxième pixel (P21) qui est inclus dans le premier groupe de pixels (GR1) et au sixième pixel (P61) qui est inclus dans le deuxième groupe de pixels (GR2) ; et dans lequel :
la quatrième ligne de données (DL3) est connectée à seulement le premier groupe de pixels (GR1) parmi les premier et deuxième groupes de pixels (GR1, GR2) et au troisième pixel (P31) qui est inclus dans le premier groupe de pixels (GR1) ; dans lequel :
la pluralité de lignes de données inclut en outre une cinquième ligne de données (DL4), une sixième ligne de données (DL5) et une septième ligne de données (DL6) ; dans lequel :
la pluralité de pixels inclut en outre des septième, huitième et neuvième pixels (P12, P22, P32) qui sont connectés à la première ligne de grille (GL1) et des dixième, onzième et douzième pixels (P42, P52, P62) qui sont connectés à la seconde ligne de grille (GL2) ; dans lequel :
les septième, huitième et neuvième pixels (P12, P22, P32) sont inclus dans un troisième groupe de pixels (GR3) et sont disposés dans une deuxième colonne de pixels (CL2) qui est adjacente à la première colonne de pixels (CL1) et qui est agencée parallèlement à la seconde direction (D2) ; dans lequel :
les dixième, onzième et douzième pixels (P42, P52, P62) sont inclus dans un quatrième groupe de pixels (GR4) et sont disposés dans la deuxième colonne de pixels (CL2) ; dans lequel :
la quatrième ligne de données (DL3) est connectée à seulement le quatrième groupe de pixels (GR4) parmi les troisième et quatrième groupes de pixels (GR3, GR4) et au dixième pixel (P42) qui est inclus dans le quatrième groupe de pixels (GR4) ; dans lequel :
la cinquième ligne de données (DL4) est connectée à la fois aux troisième et quatrième groupes de pixels (GR3, GR4) et au septième pixel (P12) qui est inclus dans le troisième groupe de pixels (GR3) et au onzième pixel (P52) qui est inclus dans le quatrième groupe de pixels (GR4) ; dans lequel :
la sixième ligne de données (DL5) est connectée à la fois aux troisième et quatrième groupes de pixels (GR3, GR4) et au huitième pixel (P22) qui est inclus dans le troisième groupe de pixels (GR3) et au douzième pixel (P62) qui est inclus dans le quatrième groupe de pixels (GR4) ; et dans lequel :
la septième ligne de données (DL6) est connectée à seulement le troisième groupe de pixels (GR3) parmi les troisième et quatrième groupes de pixels (GR3, GR4) et au neuvième pixel (P32) qui est inclus dans le troisième groupe de pixels (GR3) ; dans lequel :
la pluralité de lignes de données inclut en outre une huitième ligne de données (DL7), une neuvième ligne de données (DL8) et une dixième ligne de données (DL9) ; dans lequel :
la pluralité de pixels inclut en outre des treizième, quatorzième et quinzième pixels (P13, P23, P33) qui sont connectés à la première ligne de grille (GL1) et des seizième, dix-septième et dix-huitième pixels (P43, P53, P63) qui sont connectés à la seconde ligne de grille (GL2) ; dans lequel :
les treizième, quatorzième et quinzième pixels (P13, P23, P33) sont inclus dans un cinquième groupe de pixels (GR5) et sont disposés dans une troisième colonne de pixels (CL3) qui est adjacente à la deuxième colonne de pixels (CL2) et qui est agencée parallèlement à la seconde direction (D2) ; dans lequel :
les seizième, dix-septième et dix-huitième pixels (P43, P53, P63) sont inclus dans un sixième groupe de pixels (GR6) et sont disposés dans la troisième colonne de pixels (CL3) ; dans lequel :
la septième ligne de données (DL6) est connectée à seulement le sixième groupe de pixels (GR6) parmi les cinquième et sixième groupes de pixels (GR5, GR6) et au seizième pixel (P43) qui est inclus dans le sixième groupe de pixels (GR6) ; dans lequel :
la huitième ligne de données (DL7) est connectée à la fois aux cinquième et sixième groupes de pixels (GR5, GR6) et au treizième pixel (P13) qui est inclus dans le cinquième groupe de pixels (GR5) et au dix-septième pixel (P53) qui est inclus dans le sixième groupe de pixels (GR6) ; dans lequel :
la neuvième ligne de données (DL8) est connectée à la fois aux cinquième et sixième groupes de pixels (GR5, GR6) et au quatorzième pixel (P23) qui est inclus dans le cinquième groupe de pixels (GR5) et au dix-huitième pixel (P63) qui est inclus dans le sixième groupe de pixels (GR6) ; et dans lequel :
la dixième ligne de données (DL9) est connectée à seulement le cinquième groupe de pixels (GR5) parmi les cinquième et sixième groupes de pixels (GR5, GR6) et au quinzième pixel (P33) qui est inclus dans le cinquième groupe de pixels (GR5) ; dans lequel :
les premier, septième et treizième pixels (P11, P12, P13) sont disposés dans une première rangée de pixels (RW1), les deuxième, huitième et quatorzième pixels (P21, P22, P23) sont disposés dans une deuxième rangée de pixels (RW2), les troisième, neuvième et quinzième pixels (P31, P32, P33) sont disposés dans une troisième rangée de pixels (RW3), les quatrième, dixième et seizième pixels (P41, P42, P43) sont disposés dans une quatrième rangée de pixels (RW4), les cinquième, onzième et dix-septième pixels (P51, P52, P53) sont disposés dans une cinquième rangée de pixels (RW5), et les sixième, douzième et dix-huitième pixels (P61, P62, P63) sont inclus dans une sixième rangée de pixels (RW6) ; dans lequel :
les premier et cinquième pixels (P11, P51) sont disposés au niveau d'un unique côté par rapport à la deuxième ligne de données (DL1), les deuxième et sixième pixels (P21, P61) sont disposés au niveau d'un unique côté par rapport à la troisième ligne de données (DL2), les troisième et dixième pixels (P31, P42) sont disposés sur l'un et l'autre côtés de la quatrième ligne de données (DL3), les septième et onzième pixels (P12, P52) sont disposés sur un unique côté de la cinquième ligne de données (DL4), les huitième et douzième pixels (P22, P62) sont disposés sur un unique côté de la sixième ligne de données (DL5), et les neuvième et seizième pixels (P32, P43) sont disposés sur l'un et l'autre côtés de la septième ligne de données (DL6), les treizième et dix-septième pixels (P13, P53) sont disposés sur un unique côté de la huitième ligne de données (DL7), les quatorzième et dix-huitième pixels (P23, P63) sont disposés sur un unique côté de la neuvième ligne de données (DL8), et le quinzième pixel (P33) est disposé sur un unique côté de la dixième ligne de données (DL9).

2. Panneau d'affichage (100) selon la revendication 1, dans lequel la pluralité de pixels inclut un pixel rouge qui émet en sortie une lumière rouge, un pixel vert qui émet en sortie une lumière verte et un pixel bleu qui émet en sortie une lumière bleue.

3. Appareil d'affichage comprenant :
un contrôleur de temporisation (200) qui est configuré de manière à ce qu'il commande un fonctionnement d'un panneau d'affichage (100) et de manière à ce qu'il génère des données d'image de sortie (RGBD') sur la base de données d'image d'entrée (RGBD) ; et
un panneau d'affichage (100) qui est configuré de manière à ce qu'il affiche une image sur la base des données d'image de sortie (RGBD'),
le panneau d'affichage (100) étant défini selon la revendication 1 ou la revendication 2.
